# EUROPEAN PATENT SPECIFICATION

(11) **EP 2 119 548 B1**
(45) Date of publication and mention of the grant of the patent: **05.03.2014**
(21) Application number: 07860310.7
(22) Date of filing: 27.12.2007
(51) Int. Cl.: B29D 30/06

(54) **ALIGNED SUPPLY APPARATUS AND ALIGNED SUPPLY METHOD FOR RAW TIRES**
VORRICHTUNG ZUM AUSGERICHTETEN ZUFÜHREN UND VERFAHREN ZUM AUSGERICHTETEN ZUFÜHREN VON ROHRREIFEN
APPAREIL D'ALIMENTATION ALIGNÉE ET PROCÉDÉ D'ALIMENTATION ALIGNÉE POUR PNEUS BRUTS

(30) Priority: 10.01.2007 JP 2007002629
(43) Date of publication of application: 18.11.2009
(73) Proprietor: Bridgestone Corporation, Tokyo 104-8340 (JP)
(72) Inventor: TOYODA, Haruo, Kodaira-shi Tokyo 187-8531 (JP)
(74) Representative: Waldren, Robin Michael
(86) International application number: PCT/JP2007/075088
(87) International publication number: WO 2008/084708

(56) References cited:
- JP-A- 05 116 148
- JP-A- 05 177 637
- JP-A- 06 039 851
- JP-A- 59 007 032
- US-A- 4 092 090
- US-A1- 2006 231 191
- US-B1- 6 203 748

## Description

### Technical Field

The present invention relates to an aligned supply apparatus and aligned supply method for green tires and, more specifically, to an aligned supply apparatus and aligned supply method for green tires in which the concentricity and parallelism of the green tires with respect to a vulcanization mold are adjusted during supply of the green tires to a vulcanizer to align the green tires with the vulcanizer's mold, so that tire products with high uniformity can be produced.

### Background Art

In a tire production process, when green tires are vulcanized, conveying the green tires from a storage area and loading or inserting them into a vulcanizer are fully automatically performed. However, if the center of the vulcanizer's mold is not aligned with the center of the inserted (supplied) green tire, a vulcanization error occurs and the uniformity is deteriorated, leading to problems such as noise and poor ride quality.

To counter this, there is known a green-tire supply apparatus that performs correction when a green tire is supplied to a vulcanizing press mold with green-tire transfer means, such that the center of green-tire gripping means is moved and corrected so as to be aligned with the center of a bead ring of the vulcanizing press mold (Patent Document 1).

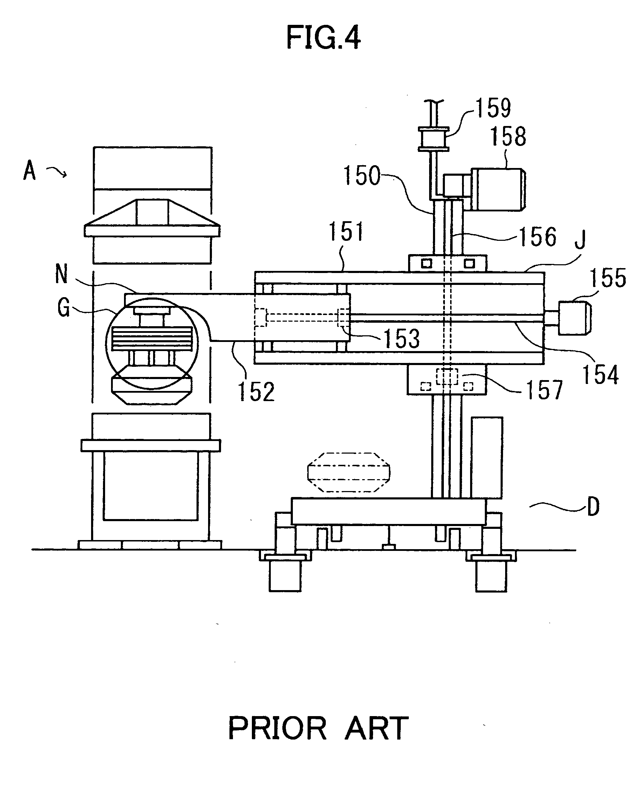

As shown in FIG. 4, this green-tire supply apparatus grips a green tire GT carried by a delivery car with a green-tire transferring apparatus provided on a green-tire conveyance dolly D and places the green tire at the center of the mold of a vulcanizing press A.

A transferring apparatus J includes a horizontal guide rail 151 that is mounted to a vertical guide rail 150 installed upright on the delivery dolly D so as to be freely slidable in a direction perpendicular thereto, and a carriage 152 that moves on the horizontal rail 151 so as to be freely slidable. The carriage 152 has, at an end thereof, a green-tire gripping device N having an automatic alignment device G. Furthermore, the carriage 152 has a nut 153 fixed thereto, which meshes with a threaded shaft 154 that is connected to a motor 155 at an end and is mounted to the horizontal guide rail 151 so as to be rotatable.

In addition, a threaded shaft 156 connected to a motor 158 is mounted to the vertical rail 150 so as to be rotatable, and a nut 157 that meshes therewith is fixed at an adequate position in the horizontal guide rail 151.

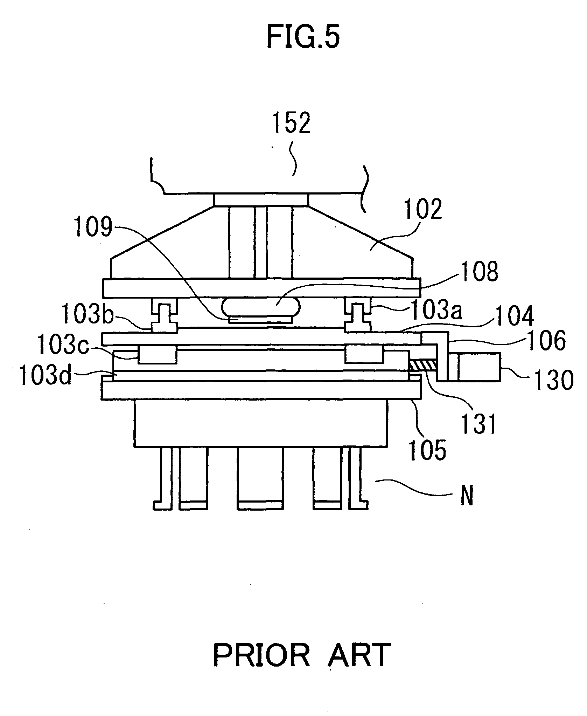

As shown in FIG. 5, the automatic alignment device G has bearing nuts 103a that are arranged in parallel and are fixed to the lower surface of a circular plate 102 fixed to an end of the carriage 152. Tracks 103b are fitted into the bearing nuts 103a, and a circular plate 104 is fixed to the tracks 103b. Bearing nuts 103c are fixed to the lower surface of the circular plate 104, similarly to the circular plate 102, and tracks 103d arranged at right angles to the tracks 103b are fixed to a base plate 105 of the green-tire gripping device N.

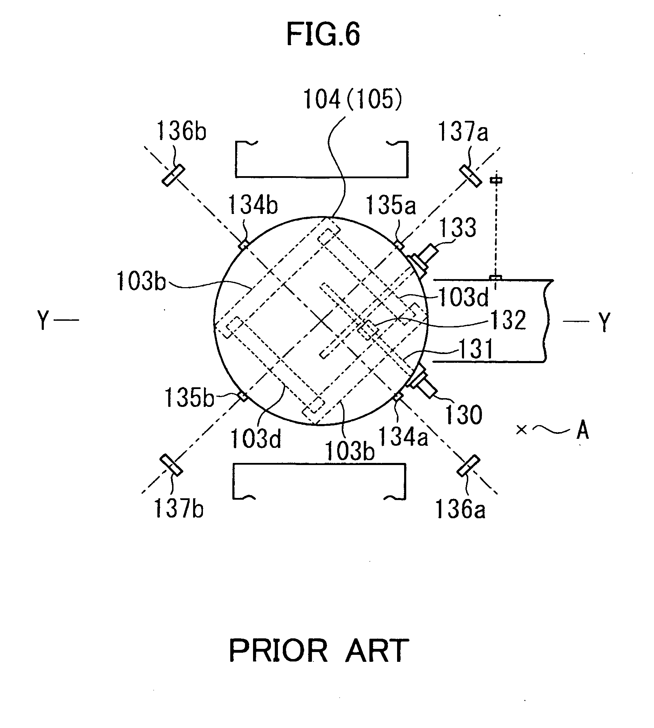

A servo motor 130 is fixed to a bracket 106 provided at the edge of the circular plate 104, and a threaded shaft 131 is connected to the servo motor 130. The threaded shaft 131 is provided along the tracks 103d and meshes with a nut 132 fixed to the base plate 105 (refer to FIG. 6). Similarly to the movement of the base plate 105 relative to the circular plate 104, the movement of the circular plate 104 relative to the circular plate 102 is performed by the servo motor 133.

As shown in FIG. 6, the tracks 103b and 103d are arranged in an X shape with respect to the traveling direction of the green-tire transferring apparatus J (Y-Y direction).

The base plate 105 has devices 134a and 134b for transmitting and receiving electric waves, sound waves, or light waves that are provided at opposite positions on an extended horizontal line passing through the true central axis of the base plate 105. Similarly to the base plate 105, the circular plate 104 has transmitting and receiving devices 135a and 135b.

On the other hand, the press A has reflection plates 136a, 136b, 137a, and 137b on an extended horizontal line from the true center of the press A so as to face the transmitting and receiving devices 134a, 134b, 135a, and 135b.

Thus, it is possible to accurately align the green-tire gripping device N with the center of the mold of the press A by stopping the green-tire gripping device N near the center of the press A, making the transmitting and receiving devices 134a, 134b, 135a, and 135b transmit signals and receive signals reflected from the reflection plate 136a, 136b, 137a, and 137b, and driving the servo motors 130 and 133 such that differences in signal reflection time are eliminated.

Then, lock mechanisms 108 and 109 of the circular plate 104 and the base plate 105 are activated to bring the green-tire gripping device N toward the bead ring of the mold and place the green tire such that the bead portion thereof is correctly aligned with the bead ring.

Similarly, there is also known an apparatus for automatically correcting the top-bottom orientation and optimum phase angle of a green tire before inserting (supplying) the green tire into a vulcanizer (refer to Patent Document 2).

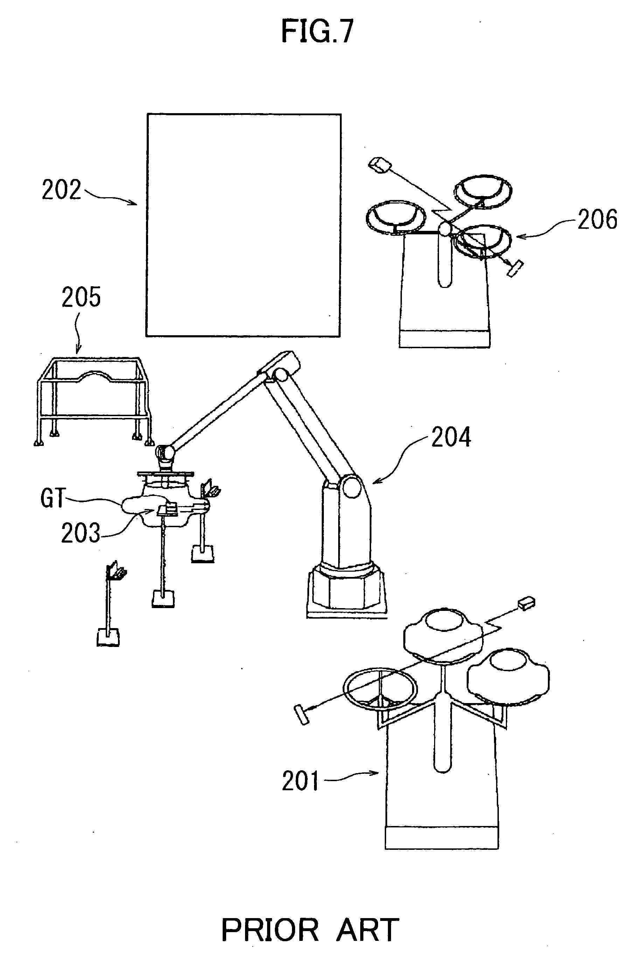

FIG. 7 shows this conventional apparatus. In this apparatus, first, data, such as a shift in angle during the conveyance of the green tire, the mold-requiring optimum angle data of the mold, and the top-bottom orientation of the green tire, is set in a control unit of a green-tire handling robot 204 and a control unit of a splice detection sensor 203.

The green-tire handling robot 204 one by one grips a plurality of green tires GT placed on a green-tire temporary placing base 201 and transfers them to the position of a splice detection sensor 203 that detects the spliced position of the inner liners attached to the inside of the green tires GT, which serves as the angle origin of the green tires. Then, while the green tire is rotated and the splice detection sensor 203 detects the spliced position of the inner liner, the correction is performed on the basis of the data preset in the control unit of the green-tire handling robot 204 and the control unit of the splice detection sensor 203 so as to conform to the optimum phase angle required by the mold of a vulcanizer 202.

At the same time, the top-bottom orientation of the green tire required by the mold is detected and, if the top-bottom position of the green tire needs to be reversed, the green tire T, whose phase angle was corrected, is transferred to a green-tire reversing table 205, where the green-tire handling robot 204 corrects the top-bottom orientation of the green tire T. Then, the green tires are placed on a vulcanizer green-tire placing base 206 and are sequentially set at predetermined positions in the molds of the vulcanizer 202.

In this manner, phase alignment of the green tires, correction of the top-bottom orientation, etc., are automatically performed to improve the phase alignment accuracy, whereby setting error in the top-bottom orientation of the green tire is prevented and a vulcanization error is effectively prevented.

However, both of the above-described conventional green-tire supply apparatuses for supplying green tires to the vulcanizers perform alignment or phase correction of green tires before loading them in the vulcanizers. Therefore, these correction methods have a problem in that they cannot immediately cope with a vulcanization error found in the tire T after vulcanization.

Although it is not disclosed in a patent document, there is a method in which the parallelism of a green tire in addition to the concentricity thereof is set in the green-tire supply apparatus attached to a vulcanizer so as to conform to the vulcanizer's mold. However, because the concentricity and parallelism set therein are fixed, a periodic accuracy check and correction are needed to prevent a vulcanization error due to the misalignment of the green tire and the vulcanization mold.

However, a checking operation is troublesome and a periodic check is not sufficient to improve or maintain the quality.
Patent Document 1: Japanese Unexamined Patent Application, Publication No. Sho 59-7032
Patent Document 2: Japanese Unexamined Patent Application, Publication No. Hei 2-136301

Reference is also made to US2006/0231191 which discloses an aligned supply apparatus for a green tire according to the preamble of Claim 1.

Reference is also made to:
US 6203748
US 4092090
JP 05-116148
JP 59-007032
JP 05-177637
JP 06-039851

### Disclosure of Invention

### Problems to be Solved by the Invention

The present invention has been made to solve the above-described problems occurring in the conventional supply apparatuses or supply methods for green tires. More specifically, an object thereof is to prevent a vulcanization error due to positional misalignment by identifying positional misalignment between the mold and the green tire in the vulcanizer during a PCI (post-cure inflation) step and automatically correcting the misalignment in real time, without performing periodic check as in the conventional case.

### Means for Solving the Problems

A first aspect of the present invention is an aligned supply apparatus for a green tire that includes means for measuring radial run-out (RRO) value of a tire in a post-cure inflator (PCI) step, control means that outputs a control signal to an apparatus for supplying a green tire to a vulcanizer on the basis of the measured RRO value, and alignment means that performs positional correction of the green tire in the green-tire supply apparatus with respect to the vulcanization mold in accordance with the control signal.

The aligned supply apparatus for a green tire according to the above-described aspect may further include means for comparing the measured RRO value with a preset reference value, and the control means may output a control signal to the apparatus for supplying a green tire to the vulcanizer when the measured RRO value exceeds the reference value.

In the aligned supply apparatus for a green tire according to the above-described aspect, the alignment means may correct the position and angle of green-tire gripping means so as to obtain the concentricity and parallelism of the green tire with respect to the vulcanization mold.

A second aspect of the present invention is an aligned supply method for a green tire, which includes a step for measuring an RRO value of a vulcanized tire during post-cure inflation of the tire, a step for outputting a control signal on the basis of the measured RRO value, and a step for performing positional correction of a green tire with respect to a mold of a vulcanizer during the supply of the tire to the vulcanizer in accordance with the control signal.

Preferred embodiments of the invention are the subject of the respective dependent claims.

The aligned supply method for a green tire according to the above-described aspect may further include a step for comparing the measured RRO value with a preset reference value, and, in the step for outputting the control signal, the control signal may be output when the measured RRO value exceeds the reference value.

In the aligned supply method for a green tire according to the above-described aspect, the step for performing positional correction with respect to the vulcanizer's mold may be a step for correcting the position and angle of green-tire gripping means so as to obtain the concentricity and parallelism of the green tire with respect to the vulcanization mold.

### Operations

The RRO value of a vulcanized tire during PCI is measured, and the measurement value is compared with a preset reference value. If the difference therebetween exceeds the reference value, an abnormality signal is generated and an alignment device of a loader for loading a green tire in a vulcanizer is feedback-controlled in accordance with the abnormality signal so that the position and angle of the green-tire gripping means are adjusted to make the green tire to be loaded be aligned and parallel with the center of the vulcanizer's mold.

### Advantages

According to the present invention, positional misalignment between the vulcanization mold and the green tire in the vulcanizer is detected in real time and is fed back to the green-tire supply apparatus so as to be automatically reflected to the alignment of the subsequent green tires. Thus, it is possible to assuredly prevent a vulcanization error due to positional misalignment as well as to efficiently produce tires having high uniformity because periodic accuracy check required in the conventional approach is not needed.

### Brief Description of Drawings

[FIG. 1] FIG. 1 is a sectional view schematically showing an apparatus for measuring the RRO value of a vulcanized tire.
[FIG. 2] FIG. 2 is a plan view schematically showing an apparatus for supplying green tires to a vulcanizer.
[FIG. 3] FIG. 3 is a vertical sectional side view of the supply apparatus shown in FIG. 2.
[FIG. 4] FIG. 4 is a vertical sectional side view showing a conventional apparatus for supplying green tires to a vulcanizer.
[FIG. 5] FIG. 5 is an enlarged view of an alignment mechanism of the green-tire supply apparatus shown in FIG. 4.
[FIG. 6] FIG. 6 is a plan view of the alignment mechanism shown in FIG. 5.
[FIG. 7] FIG. 7 is a diagram for explaining another conventional green-tire supply apparatus.

### Explanation of Reference Numerals

12: displacement gage, 14: arithmetic processing unit, 16: output unit, 18: decision unit, 20: control unit, 30: (green tire) supply apparatus, 32: arm (chuck arm), and 40: automatic alignment mechanism.

### Best Modes for Carrying Out the Invention

An aligned supply apparatus according to an example of the present invention will be described with reference to the attached drawings.

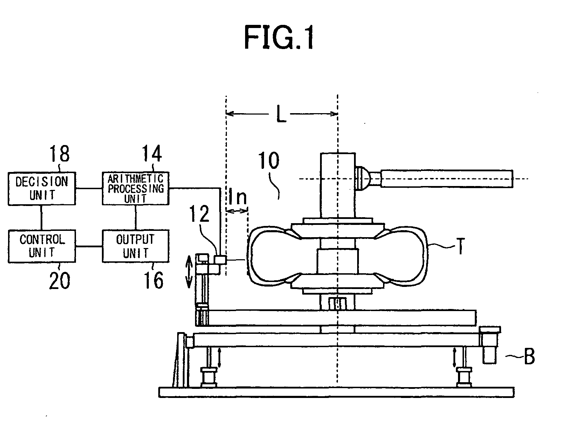

FIG. 1 is a schematic sectional view showing a device 10 for measuring run-out of the length in the radial direction, i.e., radial run-out (RRO), of a vulcanized tire T during a post-cure inflation (PCI) step performed immediately after vulcanization.

The device 10 for measuring RRO includes a displacement gage 12 for measuring the distance to the circumferential surface of the vulcanized tire T during PCI step, an arithmetic processing unit 14 for processing the data measured by the displacement gage 12, an output unit 16 that outputs the processing result by the arithmetic processing unit 14, a decision unit 18 that determines whether or not the RRO value of the vulcanized tire T is abnormal on the basis of the processing result of the arithmetic processing unit 14, and a control unit 20 that corrects and controls the parallelism and concentricity of a green-tire gripping device of a green-tire supply apparatus in accordance with an abnormality signal from the decision unit 18.

Herein, the displacement gage 12 includes, for example, a known optical measuring instrument that emits a measuring beam in the radial direction of the vulcanized tire T, and is fixed at a position away from the center of rotation of the vulcanized tire T in the radial direction of the tire T by a predetermined measurement reference distance L. In this case, the displacement gage 12 is mounted on a base B so as to be vertically movable, enabling the optical axis to vertically move in the width direction of the tire T. Thus, although the distance to the circumferential surface of the tire T can be measured at different positions in the width direction of the tire T, the measurement is usually performed in a manner that the optical axis is aligned with the central portion of the tire in the width direction.

The arithmetic processing unit 14 includes a microcomputer and is connected to the displacement gage 12 and the output unit 16. The arithmetic processing unit 14 calculates the RRO value of the vulcanized tire T on the basis of the measurement data of the displacement gage 12.

The output unit 16 has an RRO display portion or the like and outputs the measurement result on the display, a printer, or the like.

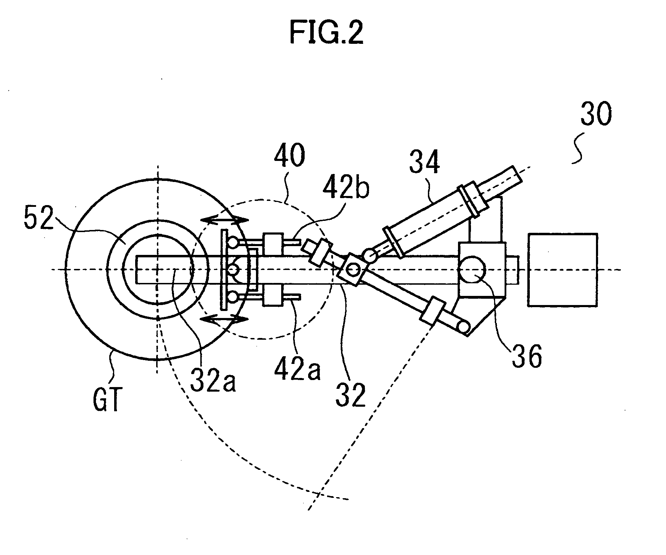

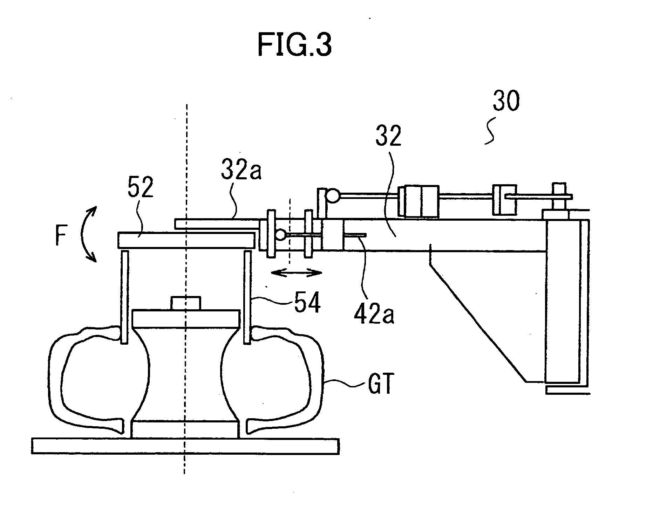

FIG. 2 is a plan view schematically showing an apparatus (loader) 30 for supplying green tires GT to the vulcanizer, and FIG. 3 is a side view of the same.

In FIG. 2, the supply apparatus (loader) 30 includes an arm (chuck arm) 32 for supporting a chuck that grips the green tire GT, and an automatic alignment mechanism 40 attached to the arm 32. Herein, the automatic alignment mechanism 40 is a conventionally known one and has threaded shafts or cylinder rods 42a and 42b for moving a circular plate 52 fixed at an end of the arm 32 in the front-rear direction of the arm 32. Furthermore, the arm 32 is configured to be pivotable about a pivot shaft 36 by a predetermined angle and is vertically slidable, as shown by an arrow F in FIG. 3.

The supply apparatus 30 can adjust the position of the circular plate 52 having a tire-gripping chuck 54 in the front-rear direction of the arm 32 upon the instruction from the control unit 20 and can adjust the pivot angle of the arm. Furthermore, as shown by an arrow F in FIG. 3, the supply apparatus 30 can adjust the tilt angle of the circular plate 52 in order to align the center of the green tire GT, gripped by the gripping portion 54 fixed to the lower side of the circular plate 52, with the center of the vulcanizer's mold and can adjust the aforementioned angle so as to be parallel with the mold.

The position of the arm in the front-rear direction, the pivot angle of the arm, and the tilt angle of the circular plate can be adjusted with any known or publicly known mechanism, such as a piston-and-cylinder mechanism, a gear transmission mechanism, or a screw transmission mechanism.

Next, control of the tire position by the green-tire supply apparatus of the present invention will be described with reference to FIG. 1.

First, in the PCI step, while the vulcanized tire T is rotated, the distance ln from the circumferential surface of the tire T to a predetermined measurement reference position is measured over the entire circumference of the tire T using an optical displacement gage 12. Then, the run-out in the radial direction (RRO) of the tire T is calculated on the basis of the measured value. At this time, the radial dimension of the tire T is measured by subtracting the measurement distance ln from the measurement reference distance L, which is the distance between the center of rotation of the vulcanized tire T and the measurement reference position.

For example, the difference between the greatest value and the smallest value of the average values of the radial dimension (L-ln) for the respective small angles is calculated as the run-out in the radial direction (RRO) of the tire T, and that value is input to the output unit 16 and the decision unit 18. Furthermore, moving the optical displacement gage 12 vertically, the measurement may also be performed at different positions in the width direction of the tire.

When the distance ln is measured to calculate the run-out in the radial direction (RRO) of the tire T, it is possible to rotate the optical displacement gage 12 around the tire T, instead of rotating the tire T.

The decision unit 18, including a microcomputer, compares the measured RRO value with a preset reference value (the reference value is determined in advance on the basis of the correlation data between preliminarily collected RRO measurement value and the eccentricity as well as the inclination) and if, as a result, the measured RRO value exceeds the reference value and is determined to be abnormal, outputs an abnormality signal to the control unit 20.

Herein, the correlation data between the RRO measurement value and the eccentricity as well as the inclination of the upper and lower rims can be obtained with respect to a sample tire by measuring the RRO value while changing the eccentricity as well as the inclination of the upper and lower rims, which is made possible by, for example, supporting the lower rim with a tapered shaft and rotating only the tapered shaft so that the parallelism level of the upper and lower rims of the PCI device can be changed, or, by configuring the upper and lower rims to be capable of relative movement such that the eccentricity can be changed. The data showing the correlation therebetween is preliminarily stored in a storage device.

Once the abnormality signal is input from the decision unit 18, the control unit 20 determines the amount of movement of the gripping portion for gripping the green tire GT corresponding to the measured RRO data on the basis of the preliminarily stored correlation data between the RRO and the data concerning the change in the concentricity as well as the parallelism of the upper and lower rims of the PCI device, and generates a parallelism-and-concentricity correction signal (control signal) including the data concerning the amount of movement of the green-tire gripping device of the supply apparatus for the green tire GT. Then, the control unit 20 drives the cylinders or the threaded shafts of the alignment mechanism of the tire supply apparatus with, for example, a servo motor or the like to move the gripping portion for gripping the green tire GT by a predetermined amount and, as shown in FIG. 3, changes the tilt angle of the chuck arm 32 to adjust the parallelism such that the green tire GT is loaded in the vulcanizer's mold so as to be parallel therewith.

The above example has been described for the case where the measured RRO value and the reference value are compared, and the decision unit 18 outputs the abnormality signal to the control unit 20 on the basis of the comparison. However, it is also possible that the control unit 20 generates a correction signal (control signal) on the basis of the correlation data between the measured RRO value and the data concerning the change in the concentricity as well as the parallelism of the upper and lower rims of the PCI device without the above-described comparison and performs the above-described control.

As has been described above, in the present invention, if the RRO measurement value of the tire T in the PCI step exceeds the reference value, by immediately controlling the supply apparatus (loader) 30 for supplying the green tire GT to the vulcanizer, the position and angle of the green tire GT with respect to the vulcanization mold are corrected so that the green tire can be made concentric and parallel therewith. Accordingly, a vulcanization error can be easily and assuredly eliminated and the quality (uniformity) of tire products can be improved.

## Claims

1. An aligned supply apparatus for a green tire (GT) comprising:
means (10) for measuring radial run-out (RRO) value of a tire (T) in a post-cure inflator (PCI) step;
**characterized in that** the aligned supply apparatus for a green tire (GT) further comprises:
control means (20) that outputs a control signal to an apparatus (30) for supplying a green tire (GT) to a vulcanizer on the basis of the measured RRO value; and
alignment means (40) that performs positional correction of the green tire (GT) in the green-tire supply apparatus (30) with respect to the vulcanization mold in accordance with the control signal.

2. The aligned supply apparatus for a green tire (GT) according to claim 1, further comprising means for comparing the measured RRO value with a preset reference value,
wherein the control means (20) outputs a control signal to the apparatus (30) for supplying a green tire to the vulcanizer when the measured RRO value exceeds the reference value.

3. The aligned supply apparatus for a green tire (GT) according to claim 1 or 2,
wherein the alignment means (40) corrects the position and angle of green-tire gripping means (54) so as to obtain the concentricity and parallelism of the green tire (GT) with respect to the vulcanization mold.

4. An aligned supply method for a green tire (GT), comprising:
a step for measuring an RRO value of a vulcanized tire (T) during post-cure inflation of the tire;
**characterized in that** the aligned supply method for a green tire (GT) further comprises:
a step for outputting a control signal on the basis of the measured RRO value; and
a step for performing positional correction of a green tire (GT) with respect to a mold of a vulcanizer during the supply of the tire to the vulcanizer in accordance with the control signal.

5. The aligned supply method for a green tire (GT) according to claim 4, further comprising a step for comparing the measured RRO value with a preset reference value,
wherein, in the step for outputting the control signal, the control signal is output when the measured RRO value exceeds the reference value.

6. The aligned supply method for a green tire (GT) according to claim 4 or 5,
wherein the step for performing positional correction with respect to the vulcanizer's mold is a step for correcting the position and angle of green-tire gripping means (54) so as to obtain the concentricity and parallelism of the green tire (GT) with respect to the vulcanization mold.

## Patentansprüche

1. Vorrichtung zum ausgerichteten Zuführen eines Reifenrohlings (GT), die aufweist:
ein Mittel (10) für das Messen des radialen Rundlauffehlerwertes (RRO-Wert) eines Reifens (T) bei einem Nachhärteaufblasschritt (PCI-Schritt);
**dadurch gekennzeichnet, dass** die Vorrichtung zum ausgerichteten Zuführen eines Reifenrohlings (GT) außerdem aufweist:
ein Steuermittel (20), das ein Steuersignal an eine Vorrichtung (30) zum Zuführen eines Reifenrohlings (GT) zu einer Vulkanisiervorrichtung auf der Basis des gemessenen RRO-Wertes ausgibt; und
ein Ausrichtmittel (40), das eine Positionskorrektur des Reifenrohlings (GT) in der Vorrichtung (30) zum Zuführen eines Reifenrohlings mit Bezugnahme auf die Vulkanisierform in Übereinstimmung mit dem Steuersignal durchführt.

2. Vorrichtung zum ausgerichteten Zuführen eines Reifenrohlings (GT) nach Anspruch 1, die außerdem ein Mittel für das Vergleichen des gemessenen RRO-Wertes mit einem vorgegebenen Bezugswert aufweist,
wobei das Steuermittel (20) ein Steuersignal an die Vorrichtung (30) zum Zuführen eines Reifenrohlings zur Vulkanisiervorrichtung ausgibt, wenn der gemessene RRO-Wert den Bezugswert übersteigt.

3. Vorrichtung zum ausgerichteten Zuführen eines Reifenrohlings (GT) nach Anspruch 1 oder 2,
bei der das Ausrichtmittel (40) die Position und den Winkel des Greifmittels (54) für den Reifenrohling korrigiert, um so den Rundlauf und die Parallelität des Reifenrohlings (GT) mit Bezugnahme auf die Vulkanisierform zu erhalten.

4. Verfahren zum ausgerichteten Zuführen eines Reifenrohlings (GT), das die folgenden Schritte aufweist:
einen Schritt für das Messen eines RRO-Wertes eines vulkanisierten Reifens (T) während des Nachhärteaufblasens des Reifens;
**dadurch gekennzeichnet, dass** das Verfahren zum ausgerichteten Zuführen eines Reifenrohlings (GT) außerdem aufweist:
einen Schritt für das Ausgeben eines Steuersignals auf der Basis des gemessenen RRO-Wertes; und
einen Schritt für das Durchführen der Positionskorrektur eines Reifenrohlings (GT) mit Bezugnahme auf eine Form einer Vulkanisiervorrichtung während der Zuführung des Reifens zur Vulkanisiervorrichtung in Übereinstimmung mit dem Steuersignal.

5. Verfahren zum ausgerichteten Zuführen eines Reifenrohlings (GT) nach Anspruch 4, das außerdem einen Schritt für das Vergleichen des gemessenen RRO-Wertes mit einem vorgegebenen Bezugswert aufweist,
wobei beim Schritt des Ausgebens des Steuersignals das Steuersignal ausgegeben wird, wenn der gemessene RRO-Wert den Bezugswert übersteigt.

6. Verfahren zum ausgerichteten Zuführen eines Reifenrohlings (GT) nach Anspruch 4 oder 5,
bei dem der Schritt des Durchführens der Positionskorrektur mit Bezugnahme auf die Form der Vulkanisiervorrichtung ein Schritt für das Korrigieren der Position und des Winkels des Greifmittels (54) für den Reifenrohling ist, um so den Rundlauf und die Parallelität des Reifenrohlings (GT) mit Bezugnahme auf die Vulkanisierform zu erhalten.

## Revendications

1. Appareil d'alimentation aligné pour un bandage pneumatique cru (GT), comprenant :
un moyen (10) pour mesurer la valeur de déviation radiale (RRO) d'un bandage pneumatique (T) lors d'une étape de gonflement post-vulcanisation (PCI) ;
**caractérisé en ce que** l'appareil d'alimentation aligné pour un bandage pneumatique cru (GT) comprend en outre :
un moyen de commande (20), transmettant un signal de commande à un appareil (30) pour amener un bandage pneumatique cru vers un dispositif de vulcanisation sur la base de la valeur RRO mesurée ; et
un moyen d'alignement (40), assurant la correction de la position du bandage pneumatique cru (GT) dans l'appareil (30) d'alimentation du bandage pneumatique cru par rapport au moule de vulcanisation, en fonction du signal de commande.

2. Appareil d'alimentation aligné pour un bandage pneumatique cru (GT) selon la revendication 1, comprenant en outre un moyen pour comparer la valeur RRO mesurée avec une valeur de référence préréglée ;
dans lequel le moyen de commande (20) transmet un signal de commande à l'appareil (30) pour amener un bandage pneumatique cru vers le dispositif de vulcanisation lorsque la valeur RRO mesurée dépasse la valeur de référence.

3. Appareil d'alimentation aligné pour un bandage pneumatique cru (GT) selon les revendications 1 ou 2,
dans lequel le moyen d'alignement (40) corrige la position et l'angle du moyen de saisie (54) du bandage pneumatique cru, de sorte à assurer la concentricité et le parallélisme du bandage pneumatique cru (GT) par rapport au moule de vulcanisation.

4. Procédé d'alimentation aligné pour un bandage pneumatique cru (GT), comprenant :
une étape de mesure d'une valeur RRO d'un bandage pneumatique vulcanisé (T) au cours du gonflement post-vulcanisation du bandage pneumatique ;
**caractérisé en ce que** le procédé d'alimentation aligné pour un bandage pneumatique cru (GT) comprend en outre :
une étape de transmission d'un signal de commande sur la base de la valeur RRO mesurée ; et
une étape d'exécution d'une correction de la position d'un bandage pneumatique cru (GT) par rapport à un moule d'un dispositif de vulcanisation au cours de l'amenée du bandage pneumatique vers le dispositif de vulcanisation, en fonction du signal de commande.

5. Procédé d'alimentation aligné pour un bandage pneumatique cru (GT) selon la revendication 4, comprenant en outre une étape de comparaison de la valeur RRO mesurée avec une valeur de référence préréglée ;
dans lequel, lors de l'étape de transmission du signal de commande, le signal de commande est transmis lorsque la valeur RRO mesurée dépasse la valeur de référence.

6. Procédé d'alimentation aligné d'un bandage pneumatique cru (GT) selon les revendications 4 ou 5,
dans lequel l'étape d'exécution de la correction de la position par rapport au moule du dispositif de vulcanisation est une étape destinée à corriger la position et l'angle du moyen de saisie du bandage pneumatique cru (54), de sorte à assurer la concentricité et le parallélisme du bandage pneumatique cru (GT) par rapport au moule de vulcanisation.
